# EUROPEAN PATENT APPLICATION

(11) **EP 4 207 113 A1**
(43) Date of publication of application: **05.07.2023**
(21) Application number: 21861811.4
(22) Date of filing: 05.03.2021
(51) Int. Cl.: G07C 9/00, G07C 9/37, G07C 9/38

(54) **AUTHENTICATION METHOD AND SYSTEM FOR GATE ACCESS**

(30) Priority: 31.08.2020 KR 20200110271
(71) Applicant: Cubox Co., Ltd., Seoul, 06236 (KR)
(72) Inventor: NAM, Un Sung, Seoul 04196 (KR)
(74) Representative: Ostertag & Partner Patentanwälte mbB
(86) International application number: PCT/KR2021/002773
(87) International publication number: WO 2022/045508

(57) **Abstract**

Provided are a method and system for authenticating gate access, the method and system including: transmitting, by a gate device, a beacon to a user terminal that has entered an area; capturing, by the gate device, a face image of a user of the user terminal, comparing the face image with a plurality of face images stored in advance to perform first authentication, and transmitting a result of the first authentication to an authentication server; requesting, by the authentication server, information for secondary authentication from the user terminal when the authentication server determines that the user is a pre-registered user according to the result of the first authentication; capturing, by the user terminal, an image of a gesture input by the user as an image according to the request of the authentication server; upon receiving the image, comparing, by the authentication server, the received image with a gesture image of the user registered in advance to perform secondary authentication; inquiring, by the authentication server, about access restriction information of the user to perform tertiary authentication and transmitting a result of the tertiary authentication to the user terminal; checking, by the user terminal, a location of a specific gate for which access authorization is given among a plurality of gates according to the result of the tertiary authentication; and transmitting, by the user terminal, a control signal to a gate device provided in the specific gate.

## Description

### Technical Field

The following disclosure relates to a method and system for performing authentication for gate access using a user biometric information-based template.

### Background Art

The human body has various pieces of biometric information, such as a fingerprint, speech, a face, an iris, and a vein, and since biometric information is unique information, authentication technology using biometric information is widely used. In particular, in the case of airports, government offices, and business offices that need to strictly restrict access for safety management, access authentication technology using biometric information, such as fingerprints, have come into wide use.

Such an authentication technology that uses biometric information has initially used information acquired by bringing a part of the body into contact with a sensing device, such as fingerprint or iris, but the acquired information has a high inaccuracy, and people have aversion to the sensing device, which is used by a plurality of users, for reasons of hygiene. Accordingly, recently, there is an increasing use of authentication technology that uses biometric information acquired in a non-contact manner, such as a face image.

On the other hand, biometric information extracted from a specific site of a body is converted into data for use. The data is called a template, and a user is authenticated using a method of comparing a pre-registered template with a template extracted in the field. However, the technology allows biometric information of users to be stored in a server regardless of the user's intention, which violates the biometric information protection guidelines.

### Detailed Description of the Invention

### Technical Problem

Therefore, it is an object of the disclosure to provide a method and system for performing authentication for gate access using a user biometric information-based template in three stages.

### Technical Solutions

In one general aspect, there is provided a method of authenticating gate access, the method including: transmitting, by a gate device, a beacon to a user terminal that has entered an area; capturing, by the gate device, a face image of a user of the user terminal, comparing the face image with a plurality of face images stored in advance to perform first authentication, and transmitting a result of the first authentication to an authentication server; requesting, by the authentication server, information for secondary authentication from the user terminal when the authentication server determines that the user is a pre-registered user according to the result of the first authentication; capturing, by the user terminal, an image of a gesture input by the user as an image according to the request of the authentication server; upon receiving the image, comparing, by the authentication server, the received image with a gesture image of the user registered in advance to perform secondary authentication; inquiring, by the authentication server, about access restriction information of the user to perform tertiary authentication and transmitting a result of the tertiary authentication to the user terminal; checking, by the user terminal, a location of a specific gate for which access authorization is given among a plurality of gates according to the result of the tertiary authentication; and transmitting, by the user terminal, a control signal to a gate device provided in the specific gate.

In another general aspect, there is provided a system for authenticating gate access, the system including: a user terminal equipped with an application for gate access of a user and configured to register an authentication template generated on the basis of a face image of the user and a gesture image using the application; a gate device configured to, upon identifying the user terminal using a beacon, capture a face image of the user of the user terminal to generate a temporary template, and compare the registered authentication template with the temporary template to perform first authentication; and a first authentication server configured to receive a result of the first authentication, determine the user as a pre-registered user, request a gesture image from the user terminal, and compare the gesture image with the registered gesture image to perform secondary authentication; and a second authentication server configured to, upon receiving a result of the secondary authentication from the first authentication server, inquire about access restriction information of the user to perform tertiary authentication, and transmit a result of the tertiary authentication to the user terminal.

### Advantageous Effects

Embodiments of the present disclosure may have effects including the following advantages. However, since it does not mean that the embodiments of the present disclosure should include all of the effects, the scope of the present disclosure should not be construed as being limited thereby.

According to one embodiment of the present disclosure, the method and apparatus for authenticating gate access can allow user's gate access to be rapidly and accurately processed through biometric information-based three stage authentication.

In addition, since biometric information of a user for which authentication is completed is not stored, the biometric information protection guidelines can be observed.

In addition, since there is no need to make a separate input or touch on a body part for gate access, the convenience of the authentication process can be increased.

### Description of Drawings

FIG. 1 is a diagram illustrating a method of authenticating gate access according to an embodiment of the present disclosure.
FIG. 2 is a diagram illustrating a system for authenticating gate access according to an embodiment of the present disclosure.
FIG. 3 is a diagram illustrating a gate device provided in a gate.

### Best mode of the Invention

While the present disclosure is subject to various modifications and alternative embodiments, specific embodiments thereof are shown by way of example in the accompanying drawings and will be described. However, it should be understood that there is no intention to limit the present disclosure to the particular embodiments disclosed, but on the contrary, the present disclosure is to cover all modifications, equivalents, and alternatives falling within the spirit and scope of the present disclosure.

It will be understood that, although the terms first, second, A, B, etc. may be used herein to describe various elements, the elements should not be limited by the terms. The terms are only used to distinguish one element from another. For example, a first element could be termed a second element, and similarly, a second element could be termed a first element without departing from the scope of the present disclosure. As used herein, the term "and/or" includes any one or combination of a plurality of the associated listed items.

As used herein, the singular forms "a" and "an" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components but do not preclude the presence or addition of one or more other features, integers, steps, operations, elements, components, and/or groups thereof.

Prior to describing the drawing in detail, it should be noted that a division of the configuration units in the specification is intended for ease of description and divided only by the main function set for each configuration unit. That is, two or more of the configuration units to be described hereinafter may be combined into a single configuration unit or formed by two or more of divisions by function into more than a single configuration unit.

Furthermore, each of the configuration units to be described hereinafter may additionally perform a part or all of the functions among functions set for other configuration units other than being responsible for the main function, and a part of the functions among the main functions set for each of the configuration units may be exclusively taken and certainly performed by other configuration units. Therefore, the existence of the configuration units that are each described through the specification needs to be functionally interpreted.

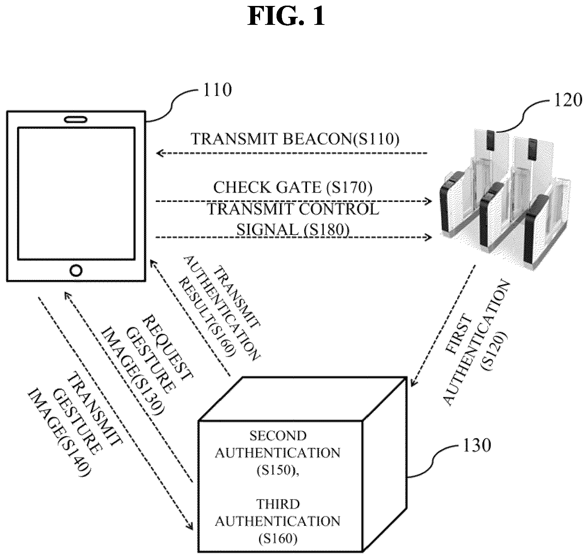

FIG. 1 is a diagram illustrating a method of authenticating gate access according to an embodiment of the present disclosure. Referring to FIG. 1, a method of authenticating gate access includes the following operations (S 110 to S180).

In operation S1 10, a gate device transmits a beacon to a user terminal. The gate device may identify the user terminal that has entered an area using the beacon. Basically, the gate device may transmit a beacon to the user terminal, but as needed, the method may operate such that the user terminal transmits a beacon to the gate device such that the user terminal and the gate device mutually identify each other. The user terminal may be a smart terminal possessed by a user, and the gate device may be a terminal device capable of exchanging a beacon with a smart terminal or a device equipped with such a module separately.

In operation S 120, the gate device captures a face image of the user of the user terminal. The gate device includes a camera capable of capturing a user's face. The gate device, upon identifying the user terminal through a beacon, may initialize or drive the camera to capture the user's face to obtain the face image.

Meanwhile, the gate device performs first authentication by comparing the captured face image with a plurality of face images stored in advance. As an embodiment, the gate device may perform first authentication by generating templates on the basis of face images and comparing each template. Here, a template generated on the basis of a face image obtained by directly capturing a user by the gate device is referred to as a temporary template, and a plurality of templates generated on the basis of the plurality of face images stored in advance are referred to as authentication templates. The gate device performs first authentication by comparing whether one of the plurality of authentication templates that is identical or similar to the temporary template exists.

Meanwhile, the gate device may generate the plurality of authentication templates in advance and store the plurality of authentication templates in a database or may generate authentication templates at a time when the camera captures the user's face image. However, preferably, in order to shorten the time required for the first authentication, the gate device may generate the plurality of authentication templates for each of the plurality of face images in advance and store the plurality of authentication templates in a database.

Meanwhile, the gate device transmits a result of the first authentication to an authentication server. The gate device and the authentication server may communicate with each other in a wired or wireless manner. The authentication server may be located in a place such as a control room that is not far from the site in which the gate device is installed or may be located in a completely different place. Therefore, the communication environment may be freely set in a wired or wireless manner in consideration of the cost of data transmission between the gate device and the authentication server.

In operation S130, the authentication server identifies whether the user is a registered user according to the result of the first authentication. For example, when one of the plurality of authentication templates matches or approximates the temporary template of the user, the authentication server may identify that the user has completed a registration procedure in advance. The authentication server, upon identifying the user as a pre-registered user, requests information for secondary authentication from the user terminal. Here, the second authentication refers to requesting that a gesture should be input to prevent credential stuffing and checking liveness for the user. In one embodiment, the authentication server may perform control to cause a user to input a pre-registered specific gesture and the gesture to be captured as an image through an application installed in the user terminal.

In operation S140, the user terminal captures the user's gesture image according to the request of the authentication server. Since the user terminal is a terminal, such as a smartphone, the user terminal is provided with a camera capable of capturing a gesture image. Therefore, the application may capture a gesture image for the secondary authentication of the user using the camera.

In operation S150, the authentication server receives the gesture image from the user terminal and compares the received gesture image with a pre-registered gesture image of the user. The authentication server performs the secondary authentication on the user by comparing the gesture images. The gesture may be a specific gesture or hand gesture registered by the user in advance. The user may capture an action, such as an OK sign, as an image and register the image in advance, and for the secondary authentication, may input the same action once more. The authentication server may compare the gesture image registered in advance with the gesture image received from the user terminal in the secondary authentication process to compare the sameness or similarity. As an embodiment, similarity may be compared on the basis of feature points or vector values included in the gesture image. In the secondary authentication, biometric information, such as a user's face image, fingerprint, or iris, may be used, but preferably, authentication capable of identifying the user may be performed through the first authentication, and in the secondary authentication, only the similarity of the gestures may be compared.

On the other hand, the authentication server, when the secondary authentication is successful, preforms the tertiary authentication by inquiring about access restriction information of the user according to operation S 160. In the tertiary authentication process, the authentication server identifies whether the user is an appropriate user to access the gate. To this end, the authentication server may perform the tertiary authentication by inquiring about the user's access restriction information. The access restriction information includes at least one of a criminal record, a departure prohibition record, and an entry prohibition record for the user. The authentication server includes a database that stores pieces of access restriction information of a plurality of users. In the database, not only the access restriction information but also the templates and the gesture images for each user are stored. In such a database, a plurality of pieces of information may be stored to match each other in one database, or may be distributed and stored in a plurality of databases.

Meanwhile, in operation S160, the authentication server, upon identifying that the tertiary authentication is successful, transmits an approach authorization for transmitting a control signal to the user terminal, and upon identifying that the tertiary authentication fails, transmits a notification according to access restriction to the user terminal. The authentication server, when a criminal record, a departure prohibition record, or an entry prohibition record of the user is retrieved, may block access to the gate even when the user has been successful in the first authentication and the secondary authentication.

Meanwhile, the authentication server transmits the result of the tertiary authentication to the user terminal. Accordingly, the user terminal may receive access authorization according to gate access of the user. The access authorization may be information including an authorization to access a gate and transmit a control signal.

In operation S170, the user terminal checks the location of a specific gate for which access authorization is given among a plurality of gates according to the result of the tertiary authentication. The specific gate refers to a gate that is determined for the user to pass therethrough in advance. In the user terminal, ticketing information is stored according to the pre-processed ticketing. Using the ticketing information, the location of the specific gate may be identified. As an embodiment, an application installed in the user terminal may receive the result of the tertiary authentication and load the ticketing information stored in advance in the user terminal. The ticketing information may include information, such as the location or number of the gate, and such information may be data in a form that may be read on a smart terminal. The user terminal may check information about the location of the specific gate on the basis of such ticketing information, and the application may output the information about the location of the specific gate on the screen.

In operation S180, the user terminal transmits a control signal to a gate device provided in the specific gate. The user terminal directly transmits the control signal to the specific gate device through an application. Operation S180 includes transmitting, by the specific gate device upon receiving the control signal, a response to the authentication server, and deleting, by the authentication server upon receiving the response, the authentication result for the user. In one embodiment, the response may be transmitted to the authentication server immediately after the control signal is transmitted from the user terminal, or when a predetermined waiting time has elapsed after the transmission of the control signal. The authentication server, upon receiving the response, may delete the authentication result for the user.

The authentication result to be deleted here includes the temporary template, the authentication template, and the gesture image of the user passing through the gate. Because access restriction records are not generated on the basis of biometric information of users, even when the authentication server continues to store the access restriction records, the storing has nothing to do with complying with the security guidelines related to biometric authentication. However, because a template or gesture image is unique information that includes information about physical characteristics of users, when the authentication server continues to store templates and gesture images, the storing may lead to forgery or leakage of information in user biometric information-based authentication or procedure. In order to prevent such limitations, the authentication server and the gate device may delete templates and gesture information for a user, who has successfully passed all procedures according to the gate pass, to thereby block the possibility of forgery or leakage of information.

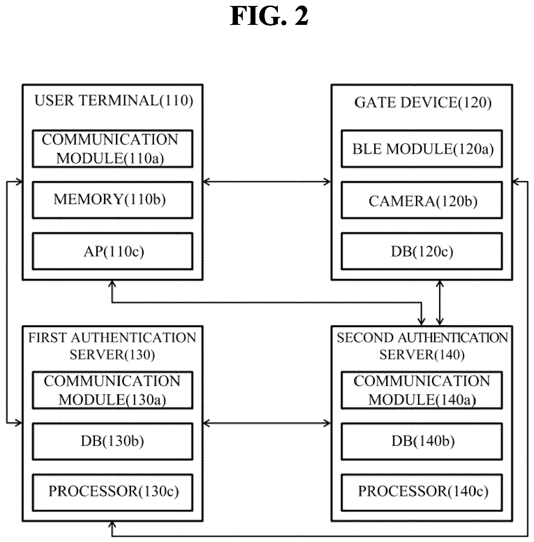

FIG. 2 is a diagram illustrating a system for authenticating gate access according to an embodiment of the present disclosure. Referring to FIG. 2, the system for authenticating gate access includes a user terminal, a gate device, a first authentication server, and a second authentication server.

The user terminal is equipped with an application for gate access of a user and registers an authentication template generated on the basis of a face image of a user and a gesture image. The user terminal is provided with a communication module 110a capable of communicating with the gate device or the authentication server. In addition, the user terminal is provided with a memory 110b for storing an application and a processor or central processing unit (CPU) for performing ticket issuance and control signal transmission using the application. The user terminal may be a smartphone, and in this case, an access point (AP) 110c may serve as the processor.

The gate device identifies the user terminal using a beacon. For example, the gate device may identify a user terminal by receiving, from the user terminal, a response to the beacon transmitted from the gate device. Alternatively, the gate device may identify a user terminal by receiving a beacon from the user terminal and transmitting a response to the beacon to the user terminal. The gate device includes a Bluetooth Low Energy (BLE) module 120a capable of transmitting or receiving a beacon. The gate device may identify a user terminal by transmitting a beacon to the user terminal that has entered an area in which Bluetooth communication is performable using the BLE module 120a.

On the other hand, the gate device, upon identifying the user terminal according to the beacon, captures a face image of the user of the user terminal to generate a temporary template. The gate device is provided with a camera 120b for capturing a face image of a user. In an embodiment, a driving signal of the camera 120b may be generated according to the identification of the user terminal. The gate device captures the face image of the user using the camera 120b and generates a temporary template using the image.

On the other hand, the gate device performs first authentication by comparing an authentication template registered in advance by the user with the temporary template generated on the basis of the face image. The gate device is provided with a database 120c for storing a plurality of authentication templates. The gate device may compare the temporary template with the authentication templates stored in the database to check whether an authentication template that matches or approximates the temporary template exists.

Meanwhile, as shown in FIG. 2, the authentication server may be divided into a first authentication server and a second authentication server. Each authentication server may perform different authentication. First, the first authentication server receives a result of first authentication from the gate device. The first authentication server, upon determining that the user is a pre-registered user according to the result of the first authentication, may request a gesture image from the user terminal. The first authentication server includes a communication module 130a to request a gesture image from the user terminal. In addition, the first authentication server is provided with a database 130b capable of storing a gesture image and a processor 130c for controlling the communication module and the database.

Meanwhile, the first authentication server is provided with a database for storing gesture images of a plurality of users. The database in which a gesture image is stored is referred to as a first database. The first authentication server, upon receiving a gesture image from the user terminal according to the request, may search the database 130b for a gesture image registered by the user terminal in advance and compare the found gesture image with the gesture image according to the request. By comparing gesture images as described above, secondary authentication may be performed.

The second authentication server communicates with the first authentication server to receive a result of the secondary authentication. The second authentication server, upon determining that the user has passed the secondary authentication, inquires about access restriction information for the user. The access restriction information includes at least one of a criminal record, a departure prohibition record, and an entry prohibition record for a user, and pieces of access restriction information for a plurality of registered users are stored in a database of the second authentication server. The second authentication server includes a communication module 140a for receiving a result of the secondary authentication, a database 140b for storing access restriction information, and a processor 140c for controlling the communication module 140a and the database 140b. The communication module 140a is used not only for the result of the secondary authentication, but also for communication with the user terminal or communication with the gate device. To this end, the communication module 140a supports various different types of communication methods including Bluetooth.

On the other hand, the second processor 140c, upon receiving the result of the secondary authentication according to the communication module 140a, inquires about the access restriction information for the user stored in the database 140b to perform tertiary authentication. The second authentication server, upon determining that the tertiary authentication is successful, transmits an approach authorization for the gate access to the user terminal, and the user terminal may transmit a control signal to a gate device provided in a specific gate for which access is allowed according to the approach authorization. When it is determined that the tertiary authentication fails, a notification according to the access restriction may be transmitted to the user terminal.

Meanwhile, the second authentication server transmits the result of the tertiary authentication to the user terminal. The second authentication server may transmit the result of the tertiary authentication using the communication module 140a. The user terminal may transmit a control signal to a specific gate device upon receiving the result of the tertiary authentication.

Meanwhile, the second authentication server may delete the template by checking that the user terminal has transmitted a control signal. As an embodiment, the second authentication server may communicate with the gate device provided in the specific gate and receive a response indicating that a control signal has been received by the gate device. In this case, the second authentication server may delete the registered authentication template and the temporary template. In other words, the second authentication server deletes user biometric information-based data having been used for authentication so as to conform to the biometric information protection guidelines.

On the other hand, the second authentication server, upon checking that the gate device provided in the specific gate has received the control signal, may communicate with the first authentication server and allow the first authentication server to delete the registered gesture image and the requested gesture image. The first authentication server may also delete the gesture image stored in the database to comply with the biometric information protection guidelines. In an embodiment, the first authentication server may communicate with the second authentication server and receive, through the second authentication server, a response indicating that a control signal has been received by the specific device. The first authentication server may directly communicate with the specific gate device and receive the response regarding the control signal. Similar to deleting of the template of the second authentication server, the first authentication server may also delete the gesture image registered in advance and the gesture image requested from the user terminal.

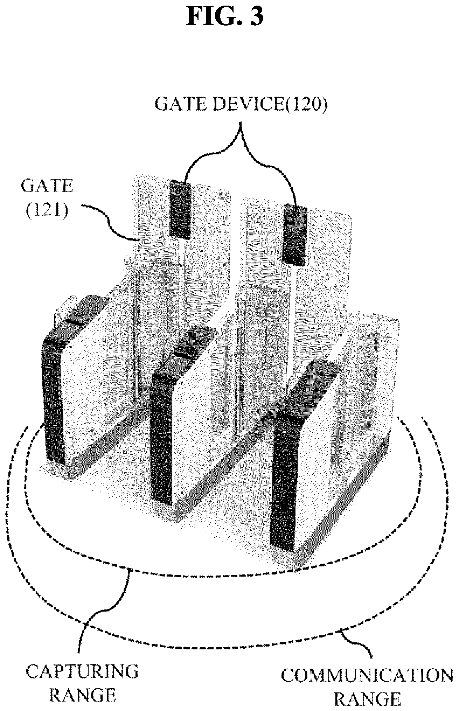

FIG. 3 is a diagram illustrating gate devices provided in gates. Referring to FIG. 3, a gate device may be provided in each gate. The gate device provided in each gate is provided with a camera for capturing the face of a user accessing a surrounding of the gate device. In order to more accurately identify biometric information contained in the user's face, the camera may be disposed at the center of the gate. The gate may have a structure that slides to the left and right sides and opens, and a space in which the gate device may be arranged in an area that faces the gate such that the gate device may be placed in front of the gate. The gate device may be a device that is equipped with a camera, and as needed, the gate device may have only the camera arranged in front of the gate, and the remaining devices, except the camera, inserted into a periphery of the gate or a structure to which the gate is fixed.

On the other hand, the gate device may identify a user terminal possessed by the user using a beacon and capture a face image of the user using the camera. The gate device may transmit a beacon to the user terminal or receive a beacon from the user terminal and have a set range in which communication is performable in a wireless manner through the beacon. For example, a communication range capable of communicating through Bluetooth may be set. In general, in the case of Bluetooth Low Energy (BLE)-based communication, a communication range of about 50 meters is formed, and the gate device may also be set to have a communication range approximating or matching 50 meters.

On the other hand, the gate device may also have a set range in which the face image of the user is captured. For example, a predetermined capturing range may be set for the user to be positioned at a distance in which feature information included in the user's face is accurately identified. In general, the communication range is formed to be wider than the capturing range, and thus the capturing range and the communication range may be different from each other as shown in FIG. 3. However, the capturing range and the communication range may be set to be the same by limiting the communication sensitivity or scope of a Bluetooth module, or installing a high-performance camera. With such a setting, the user, who is approaching the gate by a certain amount or more, may perform authentication in place without moving. In this case, since the application is automatically activated and the authentication process is performed without touching the gate device with a hand or inputting a separate input to his/her terminal, the gate access may be achieved without inconvenience in the authentication process.

Although the method and system for authenticating gate access according to embodiments of the present disclosure have been described with reference to the embodiments shown in the drawings, the above embodiments should be regarded as illustrative, and a person of ordinary skill in the art should appreciate that various modifications and equivalents derived from the teaching and suggestion of the above specification fall within the scope and sprit of the present disclosure. Therefore, the scope of the present disclosure is defined by the appended claims of the present disclosure.

## Claims

1. A method of authenticating gate access, the method comprising:
transmitting, by a gate device, a beacon to a user terminal that has entered an area;
capturing, by the gate device, a face image of a user of the user terminal, comparing the face image with a plurality of face images stored in advance to perform first authentication, and transmitting a result of the first authentication to an authentication server;
requesting, by the authentication server, information for secondary authentication from the user terminal when the authentication server determines that the user is a pre-registered user according to the result of the first authentication;
capturing, by the user terminal, an image of a gesture input by the user as an image according to the request of the authentication server;
upon receiving the image, comparing, by the authentication server, the received image with a gesture image of the user registered in advance to perform secondary authentication;
inquiring, by the authentication server, about access restriction information of the user to perform tertiary authentication and transmitting a result of the tertiary authentication to the user terminal;
checking, by the user terminal, a location of a specific gate for which access authorization is given among a plurality of gates according to the result of the tertiary authentication; and
transmitting, by the user terminal, a control signal to a gate device provided in the specific gate.

2. The method of claim 1, wherein the transmitting of the result of the first authentication to the authentication server includes:
generating, by the gate device, a temporary template using the face image; and
comparing, by the gate device, the temporary template with a plurality of authentication templates generated on the basis of the plurality of face images to perform the first authentication.

3. The method of claim 1, wherein the authentication server includes a database for storing templates, gesture images, and pieces of access restriction information of a plurality of users and transmits the templates to the gate device in advance.

4. The method of claim 1, wherein the transmitting of the control signal includes:
upon receiving the control signal, transmitting, by the gate device in the specific gate, a response to the authentication server; and
receiving, by the authentication server, the response and deleting the authentication result of the user.

5. The method of claim 1, wherein the transmitting of the control signal includes:
upon receiving the control signal, transmitting, by the specific gate device, a response to the authentication server; and
receiving, by the authentication server, the response and deleting the temporary template, the authentication template, and the gesture image of the user.

6. The method of claim 1, wherein the checking of the location of the specific gate includes receiving, by an application installed in the user terminal, the result of the tertiary authentication, loading ticketing information stored in advance in the user terminal, and outputting information about the location of the specific gate on a screen.

7. The method of claim 1, wherein the authentication server, upon determining that the tertiary authentication is successful, transmits an approach authorization for transmitting the control signal to the user terminal and, upon determining that the tertiary authentication fails, transmits a notification according to access restriction to the user terminal.

8. The method of claim 1, wherein the access restriction information includes at least one of a criminal record, a departure prohibition record, and an access prohibition record of the user.

9. A system for authenticating gate access, the system comprising:
a user terminal equipped with an application for gate access of a user and configured to register an authentication template generated on the basis of a face image of the user and a gesture image using the application;
a gate device configured to, upon identifying the user terminal using a beacon, capture a face image of the user of the user terminal to generate a temporary template and compare the registered authentication template with the temporary template to perform first authentication; and
a first authentication server configured to receive a result of the first authentication, determine the user as a pre-registered user, request a gesture image from the user terminal, and compare the gesture image with the registered gesture image to perform secondary authentication; and
a second authentication server configured to, upon receiving a result of the secondary authentication from the first authentication server, inquire about access restriction information of the user to perform tertiary authentication, and transmit a result of the tertiary authentication to the user terminal.

10. The system of claim 9, wherein the first authentication server includes a first database for storing gesture images of a plurality of users, searches the database for the gesture image registered by the user terminal, and compares the found gesture image with the requested gesture image.

11. The system of claim 9, wherein the second authentication server, upon determining that the tertiary authentication is successful, transmits an approach authorization for the gate access to the user terminal, and
the user terminal transmits a control signal to a gate device provided in a specific gate for which access is allowed according to the approach authorization.

12. The system of claim 11, wherein the second authentication server, when the gate device provided in the specific gate receives the control signal, communicates with the gate device to delete the registered authentication template and the temporary template.

13. The system of claim 11, wherein the second authentication server, when the gate device provided in the specific gate receives the control signal, communicates with the first authentication server to delete the registered gesture image and the requested gesture image.

14. The system of claim 9, wherein the second authentication server, upon determining that the tertiary authentication fails, transmits a notification according to access restriction to the user terminal.

15. The system of claim 9, wherein the access restriction information includes at least one of a criminal record, a departure prohibition record, and an access prohibition record of the user.
